# FASCICULE DE BREVET EUROPEEN

(11) **EP 0 515 706 B1**
(45) Date de publication et mention de la délivrance du brevet: **11.10.1995**
(21) Numéro de dépôt: 91107920.0
(22) Date de dépôt: 16.05.1991
(51) Int. Cl.: A23L 1/36, A23P 1/14

(54) **Procédé de traitement de graines de quinoa et produit obtenu**
Verfahren zum Behandeln von Reismeldesamen, und daraus erhaltenes Produkt
Process for the treatment of quinoa seeds, and product obtained

(43) Date de publication de la demande: 02.12.1992
(73) Titulaire: SOCIETE DES PRODUITS NESTLE S.A., 1800 Vevey (CH)
(72) Inventeur: Thomas, Rémi, F-60390 Berneuil en Bray (FR)

(56) Documents cités:
- EP-A- 0 061 229
- US-A- 3 754 930
- FOOD SCIENCE AND TECHNOLOGY ABSTRACTS; 1986; AN 86-09-G0017, INTERNATIONAL FOOD INFORMATION SERVICE; A.ROMERO: 'Effect of Extrusion on Functional Properties and Protein Quality of Quinoa (Chenopodium Quinoa)' & Archivos Latinoamericanos de Nutricion, Vol.35, No.1, pp.148- 162, 1985
- PATENT ABSTRACTS OF JAPAN vol. 009, no. 045 (C-268)26 Février 1985 & JP-A-59 187 774 ( KIKKOMAN ) 24 Octobre 1984
- WORLD PATENTS INDEX LATEST Section Ch, 1990 Derwent Publications Ltd., London, GB; Class D, AN 90-326429 (43) & SU-A-1 531 951 (VORON TECH. INST.) 30 Décembre 1989

## Description

La présente invention est relative à un procédé de traitement de graines de quinoa et au produit obtenu.

La quinoa est une plante poussant entre 2000 m et 4000 m d'altitude et qui parvient à se développer dans des conditions difficiles. La graine se présente sous la forme d'un disque d'environ 2 mm de diamètre et de 1 mm d'épaisseur . Cette graine a une composition plus équilibrée que celle des céréales, sa teneur en protéines se situant entre 14 et 18% en poids et sa teneur en matières grasses étant voisine de 5% en poids. De plus cette graine est riche en acides aminés et présente un bon équilibre en lysine, cystéine et méthionine.

Ses qualités agronomiques et sa valeur nutritionnelle en font donc, au départ, une source d'alimentation intéressante.

La graine de quinoa est ainsi consommée soit sous forme de poudre soit entière. A l'état broyé, elle constitue un liant pour potage ou plats cuisinés, entière elle est consommée comme le riz.

Or, la cuisson de la graine entière de quinoa nécessite une durée d'environ 20 minutes. Ce temps de cuisson constitue le principal obstacle à une utilisation de la graine entière de quinoa.

La présente invention a ainsi pour but de proposer un procédé de traitement de la graine entière de quinoa qui autorise ensuite un temps de cuisson de quelques minutes.

On connaît par le document EP 58651 un procédé et un dispositif pour traiter des aliments pour animaux par vapeur surchauffée.

La vapeur surchauffée est obtenue par chauffage de vapeur à une température supérieure à sa température saturante. Le traitement peut se faire à pression atmosphérique ou sous pression. Dans ce cas la vapeur est obtenue par surchauffe de vapeur saturée maintenue sous pression.

La vapeur surchauffée tend toujours à revenir à l'état de vapeur saturante en cédant sa chaleur sensible. Cette chaleur sensible peut ainsi être utilisée pour évaporer de l'eau et donc pour déshydrater un produit.

Dans ce document EP 58651, des tubes verticaux sont reliés entre eux par des tubes en U. Ces tubes verticaux comportent une double enveloppe alimentée en vapeur pour surchauffer la vapeur circulant à l'intérieur desdits tubes.

En amont du premier tube, un système d'alimentation composé d'une trémie, d'une première écluse et d'un dispositif d'injection de vapeur permet d'introduire et disperser le produit dans la vapeur surchauffée.

En aval du dernier tube, un cyclone sépare le produit traité de la vapeur. La vapeur est recyclée et surchauffée dans un échangeur de chaleur avant d'être réintroduite par un ventilateur dans le circuit tubulaire. Le produit traité est extrait du cyclone par une deuxième écluse. Les écluses assurent par ailleurs le maintien de la pression dans le circuit tubulaire de traitement. Un système de vanne permet la régulation de la pression à l'intérieur du circuit de traitement, par injection ou extraction de vapeur.

Dans ce type de dispositif, le produit à traiter est introduit s ous pression par la première écluse. Ce produit est dispersé dans le flux de vapeur surchauffée qui transporte alors le produit dans le circuit tubulaire.

Grâce à ce procédé, et à ce dispositif, de traitement à la vapeur surchauffée, il est possible de sécher le produit à traiter dans des proportions fonction des paramètres de traitement que constituent la pression, la température de la vapeur surchauffée et le temps de traitement.

Or, il a été trouvé que les graines de quinoa entières s'adaptent bien à un transport par circulation de vapeur surchauffée dans un circuit tubulaire de ce type.

Il a été par ailleurs trouvé qu'un traitement à la vapeur surchauffée, sous certaines conditions, permet d'obtenir un produit qui réduit le temps de cuisson ultérieur des graines de quinoa à quelques minutes.

Plus particulièrement, il a été trouvé que les graines de quinoa, à la sortie du cyclone, subissent, lors du retour à l'atmosphère, une expansion qu'il est possible de maîtriser. Or, il est apparu que cette expansion de la graine de quinoa entraîne une diminution du temps de cuisson.

La présente invention a ainsi pour objet un procédé de traitement de graines de quinoa dans lequel lesdites graines sont humidifiées pour amener leur teneur en matière sèche à une valeur comprise entre 65% et 85% en poids puis traitées à la vapeur surchauffée et enfin remises à des conditions de température et de pression entraînant une expansion des dites graines; les graines ayant une masse volumique apparente inférieure à 500 g/l. Préférablement, l'expansion est obtenue par simple remise des graines de quinoa aux conditions normales de température et de pression.

La présente invention a aussi pour objet une graine de quinoa ayant une masse volumique apparente inférieure à 500 g/l.

D'autres caractéristiques et avantages ressortiront à la suite de la description qui va suivre.

Comme déjà exposé ci-avant, la remise à l'atmosphère des graines de quinoa préalablement traitées à la vapeur surchauffée s'accompagne d'une expansion des graines.

En effet, l'eau contenue dans les graines de quinoa se vaporise suite à l'apport énergétique dû à la vapeur surchauffée. Les graines de quinoa étant très dures, la vapeur d'eau est piègée dans la graine qui monte ainsi en pression, indépendamment du fait que la vapeur surchauffée soit elle même sous pression ou non.

Lors de la remise à l'atmosphère des graines, le choc thermique, et éventuellement la différence de pression entre le circuit tubulaire et l'atmosphère, entraîne une expansion des graines et un entraînement de la vapeur contenue dans ces graines.

Il convient ainsi de mettre en évidence les paramètres essentiels qui commandent à l'expansion.

Il est apparu qu'il est absolument nécessaire d'humidifier, avant ce traitement à la vapeur surchauffée, les graines de quinoa. Ainsi paradoxalement, avant de sécher les graines, elles sont réhydratées afin d'abaisser leur teneur en matière sèche.

Ceci peut être réalisé par immersion dans de l'eau, à l'intérieur d'un mélangeur fonctionnant par intermittence. Préférentiellement la réhydratation dure 4 heures avec une agitation du mélange de 1 minute toutes les 20 minutes.

La teneur en matière sèche des graines de quinoa passe ainsi d'une teneur initiale de 90% en poids à une teneur finale qui doit être comprise entre 65% et 85% en poids.

Le tableau ci-dessous illustre l'influence de la teneur en matière sèche initiale sur la masse volumique apparente non tassée du produit final et donc sur l'expansion, les graines avant traitement ayant une masse volumique apparente de l'ordre de 830 g/l.

Au cours de ces essais les conditions de traitement ont été les suivantes :
- Pression dans l'enceinte de traitement à la vapeur surchauffée : 1,3 bar
- Temps de traitement : 15 s
- Température : 207°C
- Débit : 15 kg/h

| Essai | Teneur en matière sèche initiale (%) | Masse volumique apparente après traitement (g/l) | Teneur en matière sèche finale (%) |
|---|---|---|---|
| 1 | 90,2 | 540 | 96,0 |
| 2 | 77,5 | 423 | 93,9 |
| 3 | 71,9 | 418 | 93,1 |
| 4 | 66,2 | 435 | 92,1 |
| 5 | 63,9 | 488 | 88,6 |

On voit ainsi que la masse volumique apparente après traitement passe par un minimum pour une teneur initiale en matière sèche voisine de 70% en poids.

A côté de cette teneur en matière sèche du produit initial, le deuxième paramètre qui contrôle le degré d'expansion du produit traité est constitué par la température de la vapeur surchauffée.

Des essais ont ainsi été réalisés en faisant varier la température de la vapeur.

Les condition de traitement étaient les suivantes :
- Pression dans l'enceinte de traitement : 3,0 bar
- Temps de traitement : 15 s
- Teneur en matière sèche initiale : 72.9% en poids
- Débit : 15 kg/h
Le tableau ci-dessous illustre l'influence de la température sur la masse volumique apparente non tassée et donc sur l'expansion du produit.

| Essai | Température (°C) | Masse volumique apparente non tassée (g/l) | Teneur en matière sèche après traitement (%) |
|---|---|---|---|
| Témoin | -- | 828 | -- |
| 1 | 161 | 648 | 85,25 |
| 2 | 173 | 560 | 88,81 |
| 3 | 187 | 460 | 91,22 |
| 4 | 202 | 408 | 92,82 |

Il apparaît ainsi une rupture de pente très nette vers 185°C, une augmentation de la température, au delà, entraînant une augmentation concomittante de l'expansion beaucoup plus faible.

Il est ainsi préférable pour obtenir un bon effet d'expansion d'utiliser une vapeur surchauffée à une température au moins égale à 185°C.

Le troisième paramètre à prendre en compte est constitué par le temps de traitement. Le temps de traitement optimal dépend en fait fortement de la température de la vapeur.

L'influence du temps de traitement a été mesurée sur des graines réhydratées présentant une teneur en matière sèche de 71,4% en poids.

Les conditions de traitement étaient les suivantes :
- Pression dans l'enceinte : 3,0 bar
- Température de la vapeur : 199°C
- Débit : 15 kg/h
Le tableau ci-dessous illustre l'influence du temps de traitement.

| Essai | Temps de traitement (en secondes) | Masse volumique apparente non tassée (g/l) | Teneur en matière sèche après traitement (%) |
|---|---|---|---|
| 1 | 20 | 496 | 91,4 |
| 2 | 18 | 472 | 91,3 |
| 3 | 16 | 444 | 92,8 |
| 4 | 14 | 435 | 92,5 |
| 5 | 12 | 410 | 93,1 |

L'influence du temps de traitement est donc évidente sur la masse volumique apparente et donc sur l'expansion du produit.

On note par ailleurs que la diminution du temps de séjour entraîne une augmentation de la teneur en matière sèche. Ceci est a priori paradoxal. Ceci est dû au fait que dans un traitement court, le séchage est faible, le départ de l'eau se fait davantage lors de la détente résultant de la remise à l'atmosphère. Le départ de l'eau étant violent, l'expansion est plus importante d'où une augmentation de la surface d'échange et une augmentation du séchage.

Enfin, il est apparu que, paradoxalement, la pression dans l'enceinte influe peu sur l'expansion du produit final même si cette expansion augmente avec la pression régnant dans l'enceinte.

Les exemples ci-après illustrent l'influence de la masse volumique apparente obtenue après traitement, et donc l'influence de l'expansion, sur le temps de la cuisson ultérieure.

| Essai | Masse volumique apparente (g/l) | Temps de cuisson (minutes) |
|---|---|---|
| Témoin | 830 | 20 |
| 1 | 650 | 10 |
| 2 | 500 | 5 |
| 3 | 410 | 3 |
| 4 | 350 | 2 |

Il apparaît ainsi clairement qu'en pouvant obtenir de façon reproductible, grâce au procédé de l'invention, un produit final ayant une masse volumique apparente déterminée, il est possible de réduire le temps de cuisson de façon drastique.

Plus particulièrement, et pour obtenir une réduction significative du temps de cuisson, il est nécessaire d'obtenir des graines de quinoa ayant une masse volumique apparente inférieure à 500 g/l.

## Revendications

1. Procédé de traitement de graines de quinoa dans lequel lesdites graines sont humidifiées pour amener leur teneur en matière sèche à une valeur comprise entre 65% et 85% en poids puis traitées à la vapeur surchauffée et enfin remises à des conditions de température et de pression entraînant une expansion des dites graines; les graines ayant une masse volumique apparente inférieure à 500 g/l.

2. Procédé selon la revendication 1 dans lequel la température de la vapeur surchauffée est supérieure à 185°C.

3. Procédé selon la revendication 2 dans lequel le temps de traitement à la vapeur surchauffée est inférieur à 20 secondes.

4. Graines de quinoa ayant une masse volumique apparente inférieure à 500 g/l.

## Claims

1. A process for treating quinoa seeds in which the seeds are moistened to bring their dry matter content to a value of 65% to 85% by weight, are subsequently treated with superheated steam and, finally, are restored to temperature and pressure conditions which cause the seeds to expand, the seeds having an apparent density below 500 g/l.

2. A process as claimed in claim 1, in which the temperature of the superheated steam is above 185°C.

3. A process as claimed in claim 2, in which the treatment time with the superheated steam is below 20 seconds.

4. Quinoa seeds having an apparent density below 500 g/l.

## Patentansprüche

1. Verfahren zur Behandlung von Reismeldesamen, bei dem diese Samen angefeuchtet werden, um ihren Trockenmassegehalt auf einen Wert zwischen 65 und 85 Gew.-% zu bringen, dann mit einem überhitzten Dampf behandelt und schließlich Temperatur- und Druckbedingungen ausgesetzt werden, die eine Expansion der Samen zur Folge haben, wobei die Körner eine Schüttdichte von weniger als 500 g/l aufweisen.

2. Verfahren nach Anspruch 1, bei dem die Temperatur des überhitzten Dampfes höher als 185°C ist.

3. Verfahren nach Anspruch 2, bei dem die Behandlungszeit mit dem überhitzten Dampf kürzer als 20 Sekunden ist.

4. Reismeldesamen, die eine Schüttdichte von weniger als 500 g/l aufweisen.
